# EUROPÄISCHE PATENTSCHRIFT

(11) **EP 1 661 382 B1**
(45) Veröffentlichungstag und Bekanntmachung des Hinweises auf die Patenterteilung: **25.03.2009**
(21) Anmeldenummer: 04762683.3
(22) Anmeldetag: 16.08.2004
(51) Int. Cl.: H04M 15/00, H04L 12/14

(54) **VERGEBÜHRUNG VON VERKEHRSDATEN**
BILLING OF TRAFFIC DATA
FACTURATION DE DONNEES DE TRAFIC

(30) Priorität: 03.09.2003 DE 10340531
(43) Veröffentlichungstag der Anmeldung: 31.05.2006
(73) Patentinhaber: Nokia Siemens Networks GmbH & Co. KG, 81541 München (DE)
(72) Erfinder: FÖLL, Uwe, 14612 Falkensee (DE); KAIN, Albert, A-1160 Wien (AT)
(86) Internationale Anmeldenummer: PCT/DE2004/001841
(87) Internationale Veröffentlichungsnummer: WO 2005/025198

(56) Entgegenhaltungen:
- EP-A- 1 096 742
- WO-A-01/28160
- WO-A-02/37870
- "3rd Generation Partnership Project; Technical Specification Group Services and System Aspects; General Packet Radio Service (GPRS); Service Description; Stage 2 (Release 5);V5.6.0 (2003-06)" 3GPP TECHNICAL SPECIFICATION 23.060 V 5.6.0, [Online] Bd. 5.6.0, Nr. 23.060, Juni 2003 (2003-06), Seiten 120-143, XP002312416 3GPP SUPPORT OFFICE SOPHIA ANTIPOLIS, VALBONNE, FRANCE Gefunden im Internet: URL:ftp://ftp.3gpp.org/specs/archive/23_se ries/23.060/> [gefunden am 2005-01-03]

## Beschreibung

Die Erfindung betrifft ein Verfahren und eine Vorrichtung zum Vergebühren von Verkehrsdaten in einem Kommunikationsnetz.

Derzeit werden Verfahren zur Vergebührung von Applikationen, wie zum Beispiel das Herunterladen von Spielen, Bildern, Videos etc. auf Basis von IP-Adresse und Port-Filterung angeboten. Mit diesen Verfahren ist eine Unterscheidung der Applikationen erst möglich. Da sich jedoch unterschiedliche Codes in einem virtuellen Übertragungskanal (PDP Kontext) negativ beeinflussen können und die Performance bzw. die zur Verfügung gestellte Qualität des Dienstes (QoS) weiter eingeschränkt werden kann, kann dies für einzelne Dienste bzw. Applikationen nicht ausreichen. Applikationen bzw. Anwendungen, wie zum Beispiel Online-Banking, Auktionen, Internet-Handel, etc. benötigen für eine Übertragung einen PDP Kontext (einen virtuellen Übertragungstunnel bzw. -kanal durch ein zellulares Mobilfunknetz der dritten Generation (3GPP)) um eine entsprechende Vergebührung und/oder eine Übertragungssicherheit zu gewährleisten. So können zum Beispiel für höherwertige Inhalte darauf angepasste Tarifmodelle vergebührt werden. Mit Hilfe des virtuellen Übertragungskanals (PDP Kontext) ist es dabei möglich, eine eindeutige Zuordnung der Gebühren für die Ressourcenbenutzung der Applikation sicherzustellen.

Die Spezifikation 3GPP TS 23.060 V5.6.0 (2003-06) 3^{rd} Generation Partnership Project; Technical Specification Group Services and System Aspects; General Packet Radio Service (GPRS); Service description; Stage 2 (Release 5) beschreibt unter Paragraph 9 (ab Seite 120) die Verwendung von virtuellen Übertragungskanälen zwischen einem mobilen Endgerät und einem Gateway-GPRS-Support-Knoten (GGSN). In dieser Spezifikation sind Aktivierung, Deaktivierung, Modifikation etc. der virtuellen Übertragungskanäle erläutert.

EP 1 096 742 A1 offenbart, dass ein PDP-Kontext generell die Übertragungsinformation für Pakete derselben Anwendung definiert.

Internet draft, Titel: "Recommendation for IPv6 in 3GPP standards", veröffentlicht im Internet im April 2002, URL: www.ietf.org/proceedings/02ju11/I-D/draft-ietf-ipv6-3gpp-recommend-02.txt offenbart in Fig. 3 Grundprinzipien einer vereinfachten GPRS-Architektur. Es ist zu entnehmen, dass bei einer PDP-Kontextaktivierung die SGSN eine DNS-Anfrage durchführt, um die GGSN herauszufinden, die dem ABN, der von dem Terminal angefragt wurde, zur Verfügung steht.

Die Aufgabe der vorliegenden Erfindung besteht darin, eine effiziente und einfache Möglichkeit für die Vergebührung von Verkehrsdaten vorzuschlagen.

Die Aufgabe wird erfindungsgemäß durch die Gegenstände der unabhängigen Patentansprüche gelöst. Weiterbildungen der Erfindung sind in den Unteransprüchen angegeben. Ein Kern der Erfindung besteht darin, dass gemäß einer Zuordnung vom Gateway-GPRS-Support-Knoten (GGSN) für eine Applikation jeweils ein eigener virtueller Übertragungskanal für die Übertragung von Verkehrsdaten der Applikation bereitgestellt wird. Mit mindestens einer Zuordnungsvorschrift für die Vergebührung der betreffenden Verkehrsdaten der Applikation kann dabei eine Zuordnung getroffen werden. Informationen zur Vergebührung der Verkehrsdaten der Applikation können vom Gateway-GPRS-Support-Knoten (GGSN) an eine Vergebührungseinheit weitergeleitet werden. Außerdem kann ein IP-Tunnel zum sicheren Übertragen der Verkehrsdaten der Applikation über einen virtuellen Übertragungskanal verwendet werden. Ein wesentlicher Vorteil der Erfindung besteht darin, dass auf sehr einfache und effiziente Art und Weise Verkehrsdaten von einer Netzeinheit vergebührt werden können.

Die Erfindung wird anhand eines in den Figuren dargestellten Ausführungsbeispiels näher erläutert. Im Einzelnen zeigen
- Figur 1: eine vereinfachte Architektur für die Übertra- gung und die Vergebührung von Verkehrsdaten einer Applikation mit Hilfe eines virtuellen Übertragungskanals,
- Figur 2: einen erfindungsgemäßen Gateway-GPRS-Support- Knoten.

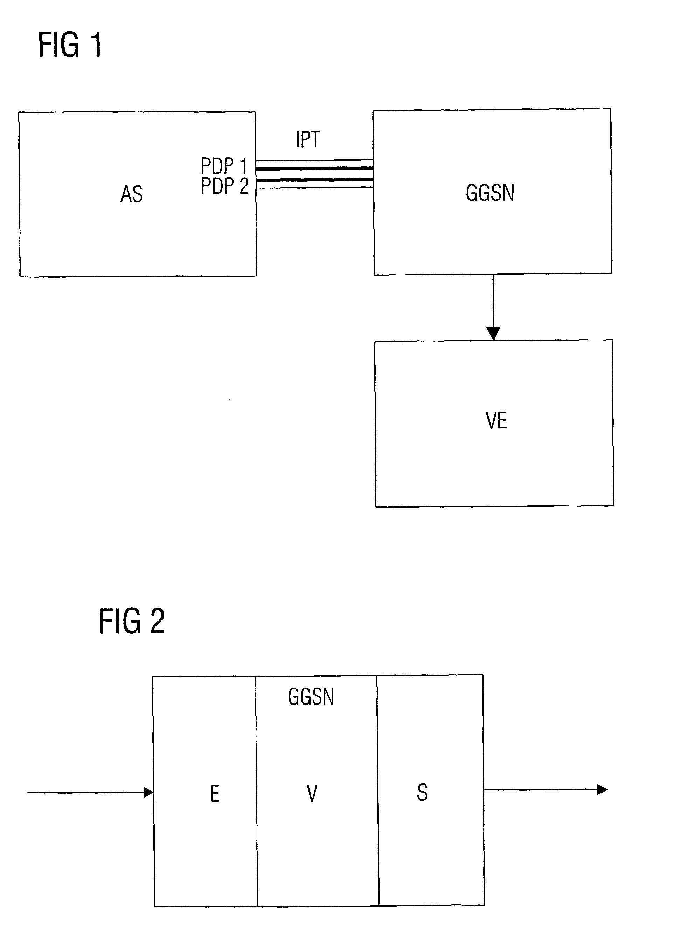

Figur 1 zeigt eine vereinfachte Architektur für die Übertragung und die Vergebührung von Verkehrsdaten einer Applikation mit Hilfe eines virtuellen Übertragungskanals PDP 1, PDP 2 in einem zellularen Mobilfunknetz. Ein anderes Kommunikationsnetz ist ebenso vorstellbar. Verkehrsdaten von einer Netzeinheit AS, wie zum Beispiel von einem Applikationsserver, einem Diensteserver oder Ähnlichem werden an einen Gateway-GPRS-Support-Knoten GGSN übertragen. Als Netzwerkfunktion mit entsprechenden Zugriffsrechten kann eine Netzeinheit AS sich einen exklusiven, vom Gateway-GPRS-Support-Knoten GGSN bereitgestellten, virtuellen Übertragungskanal PDP 1, PDP 2 reservieren und initiieren. Hier muss es sich um eine Netzwerksfunktion handeln, damit eine entsprechende Sicherheit für die Vergebührung der Verkehrsdaten bei bestimmten Applikationen sichergestellt ist. Solche Applikationen können Online-Banking, Auktionen, Internet-Handel, Kreditkarten-Bezahlung etc. sein. Zur Unterscheidung der einzelnen Verkehrsdaten wird in einer Verarbeitungs- und Zuordnungseinheit V eines Gateway-GPRS-Support-Knotens GGSN, wie zum Beispiel einer IP-Fluss-Funktionseinheit eine Zuordnungsvorschrift betreffend die Vergebührung von Verkehrsdaten gespeichert. Wird aufgrund dieser Zuordnungsvorschrift vom Gateway-GPRS-Support-Knoten GGSN festgestellt, dass für Verkehrsdaten in einem neu aufgebauten Datenstrom die Vergebührung, zum Beispiel in Abhängigkeit von der Zeit, erfasst werden soll, wird für die Verkehrsdaten in dem Datenstrom ein eigener virtueller Übertragungskanal (PDP Kontext) PDP 1, PDP 2 bereitgestellt. Für den virtuellen Übertragungskanal PDP 1, PDP 2 kann die genaue Zeit des Bestehens ermittelt werden und die Information an eine Vergebührungseinheit VE zur Vergebührung weitergeleitet werden. Damit ist es auch möglich nur Teile einer Applikation zu vergebühren. Eine solche Teil-Applikation wird erfindungsgemäß als Applikation bezeichnet. Dies kann durch den Gateway-GPRS-Support-Knoten GGSN geschehen. Das erfindungsgemäße Verfahren und die erfindungsgemäße Vorrichtung kann sowohl für Vorauszahlungs-Vergebührung (Offline-Vergebührung) als auch für Rechnungsstellungs-Vergebührung (Online-Vergebührung) genutzt werden. So kann eine Netzeinheit AS Verkehrsdaten einer Applikation mit einer entsprechenden Vergebührungs-Zuordnungsvorschrift zur Verfügung stellen. Ein Gateway-GPRS-Support-Knoten GGSN stellt mit dieser Zuordnungsvorschrift einen eigenen virtuellen Übertragungskanal PDP 1, PDP 2 für die Verkehrsdaten bereit. Damit ist keine Port-Filterung der Verkehrsdaten durch den Gateway-GPRS-Support-Knoten GGSN bzw. einer anderen Netzeinheit notwendig. Durch die Verwendung eines IP-Tunnels IPT zwischen der Netzeinheit AS und dem Gateway-GPRS-Support-Knoten GGSN kann die Sicherheit entscheidend verbessert werden. Dies kann, zum Beispiel bei einem Internet-Zugangs-Portal für Aktien-Handel interessant sein. Somit kann von der Anwendung am Endgerät bis zur Netzeinheit AS sichergestellt werden, dass keine andere Applikation Zugriff auf die Verkehrsdaten hat. Als Endgerät kann ein Mobilfunkendgerät, ein Handheld, ein Computer, ein Notebook oder Ähnliches verwendet werden.

Figur 2 zeigt einen Gateway-GPRS-Support-Knoten GGSN mit einer Empfangseinheit E zum Empfangen von Verkehrsdaten einer Applikation in einem Datenstrom, einer Verarbeitungs- und Zuordnungseinheit V zum Erstellen einer Zuordnung und zum Bereitstellen eines eigenen virtuellen Übertragungskanals PDP 1, PDP 2. Mit einer Sendeeinheit S des Gateway-GPRS-Support-Knotens GGSN werden die Verkehrsdaten der Applikation dann über einen eigenen virtuellen Übertragungskanal PDP 1, PDP 2 übertragen. Von der Verarbeitungs- und Zuordnungseinheit V erstellte Informationen für die Vergebührung der Verkehrsdaten der Applikation, die über einen eigenen virtuellen Übertragungskanal PDP 1, PDP 2 übertragen werden, können von der Sendeeinheit S an eine Vergebührungseinheit VE zur Vergebührung weitergeleitet werden.

## Patentansprüche

1. Verfahren zum Vergebühren von Verkehrsdaten von Applikationen in einem Kommunikationsnetz,
**dadurch gekennzeichnet,**
**dass** von einem Gateway-GPRS-Support-Knoten (GGSN) für die Übertragung der Verkehrsdaten jeweils einer Applikation ein eigener PDP Kontext zwischen einem Diensteserver und/oder Applikationsserver (AS) und dem Gateway-GPRS-Support-Knoten (GGSN) bereitgestellt und für diesen PDP Kontext eine Vergebührung durchgeführt wird.

2. Verfahren nach Anspruch 1,
**dadurch gekennzeichnet,**
**dass** vom Gateway-GPRS-Support-Knoten (GGSN) für von dem Diensteserver und/oder Applikationsserver (AS) gesendete Verkehrsdaten der Applikation gemäß mindestens einer Zuordnungsvorschrift eine Zuordnung für die Vergebührung der Verkehrsdaten der Applikation gemacht wird.

3. Verfahren nach Anspruch 2,
**dadurch gekennzeichnet,**
**dass** die Zuordnung betreffend die Vergebührung von Verkehrsdaten der Applikation durch eine Verarbeitungs- und Zuordnungseinheit (V) des Gateway-GPRS-Support-Knotens (GGSN) erfolgt.

4. Verfahren nach einem der vorhergehenden Ansprüche,
**dadurch gekennzeichnet,**
**dass** Informationen für die Vergebührung der Verkehrsdaten der Applikation vom Gateway-GPRS-Support-Knoten (GGSN) an eine Vergebührungseinheit (VE) weitergeleitet werden.

5. Verfahren nach einem der vorhergehenden Ansprüche,
**dadurch gekennzeichnet,**
**dass** zwischen dem Diensteserver und/oder Applikationsserver (AS) und dem Gateway-GPRS-Support-Knoten (GGSN) ein IP-Tunnel (IPT) für die Übertragung der Verkehrsdaten der Applikation verwendet wird.

6. Verfahren nach einem der vorhergehenden Ansprüche,
**dadurch gekennzeichnet,**
**dass** das Kommunikationsnetz ein zellulares Mobilfunknetz ist.

7. Verfahren nach einem der vorhergehenden Ansprüche,
**dadurch gekennzeichnet,**
**dass** als Endgerät (MS) ein Mobilfunkendgerät, ein Handheld, ein Computer, ein Notebook und/oder Ähnliches verwendet wird.

8. Verfahren nach einem der Ansprüche 2 bis 7,
**dadurch gekennzeichnet,**
**dass** mindestens eine der Zuordnungsvorschriften betreffend die Vergebührung der Verkehrsdaten der Applikation von dem Verkehrsdaten der Applikation übertragenden Diensteserver und/oder Applikationsserver (AS) an den Verkehrsdaten der Applikation empfangenden Gateway-GPRS-Support-Knoten (GGSN) signalisiert wird.

9. Vorrichtung zum Vergebühren von Verkehrsdaten von Applikationen in einem Kommunikationsnetz, **dadurch gekennzeichnet, dass** die Vorrichtung
- mit einer Verarbeitungs- und Zuordnungseinheit (V) in einem Gateway-GPRS-Support-Knoten (GGSN) zum Bereitstellen jeweils eines eigenen PDP Kontextes für die Übertragung von Verkehrsdaten der Applikation zwischen einem Diensteserver und/oder Applikationsserver (AS) und dem Gateway-GPRS-Support-Knoten (GGSN) und zum Durchführen der Vergebührung des PDP Kontextes und
- mit einer Empfangseinheit (E) und einer Sendeeinheit (S) in dem Gateway-GPRS-Support-Knoten (GGSN) zum Empfangen und Übertragen der Verkehrsdaten der Applikation an den Diensteserver und/oder Applikationsserver (AS) über den PDP Kontext ausgerüstetist.

10. Vorrichtung nach Anspruch 9,
**dadurch gekennzeichnet,**
**dass** zwischen dem Diensteserver und/oder Applikationsserver (AS) und dem Gateway-GPRS-Support-Knoten (GGSN) ein IP-Tunnel (IPT) für die Übertragung der Verkehrsdaten der Applikation vorgesehen ist.

11. Vorrichtung nach Anspruch 9 oder 10,
**dadurch gekennzeichnet,**
**dass** die Verarbeitungs- und Zuordnungseinheit (V) vom Gateway-GPRS-Support-Knoten (GGSN) zum Zuordnen der Vergebührung gemäß mindestens einer Zuordnungsvorschrift für die Verkehrsdaten der Applikation vorgesehen ist.

12. Vorrichtung nach einem der Ansprüche 9 bis 11,
**dadurch gekennzeichnet,**
**dass** als Kommunikationsnetz ein zellulares Mobilfunknetz vorgesehen ist.

## Claims

1. Method for billing for traffic data from applications in a communication network,
**characterized**
**in that** for transmitting the traffic data from a respective application, a Gateway GPRS Support Node (GGSN) provides a dedicated PDP context between a service server and/or application server (AS) and the Gateway GPRS Support Node (GGSN) and performs billing for this PDP context.

2. Method according to Claim 1,
**characterized**
**in that** for traffic data from the application which are sent by the service server and/or application server (AS), the Gateway GPRS Support Node (GGSN) takes at least one association rule as the basis for making an association for the billing for the application's traffic data.

3. Method according to Claim 2,
**characterized**
**in that** the association relating to the billing for traffic data from the application is made by a processing and association unit (V) at the Gateway GPRS Support Node (GGSN).

4. Method according to one of the preceding claims,
**characterized**
**in that** information for billing for the application's traffic data is forwarded from the Gateway GPRS Support Node (GGSN) to a billing unit (VE).

5. Method according to one of the preceding claims,
**characterized**
**in that** between the service server and/or application server (AS) and the Gateway GPRS Support Node (GGSN) an IP tunnel IPT is used for transmitting traffic data from the application.

6. Method according to one of the preceding claims,
**characterized**
**in that** the communication network is a cellular mobile radio network.

7. Method according to one of the preceding claims,
**characterized**
**in that** the terminal (MS) used is a mobile radio terminal, a handheld unit, a computer, a Notebook and/or the like.

8. Method according to one of Claims 2 to 7,
**characterized**
**in that** at least one association rule relating to the billing for the application's traffic data is signaled to the Gateway GPRS Support Node (GGSN) receiving traffic data from the application by the service server and/or application server (AS) transmitting traffic data from the application.

9. Apparatus for billing for traffic data from applications in a communication network, **characterized in that** the apparatus is equipped
- with a processing and association unit (V) at a Gateway GPRS Support Node (GGSN) for providing a respective dedicated PDP context for transmitting traffic data from the application between a service server and/or application server (AS) and the Gateway GPRS Support Node (GGSN) and for performing the billing for the PDP context, and
- with a reception unit (E) and a transmission unit (S) at the Gateway GPRS Support Node (GGSN) for receiving and transmitting the traffic data from the application to the service server and/or application server (AS) via the PDP context.

10. Apparatus according to Claim 9,
**characterized**
**in that** between the service server and/or application server (AS) and the Gateway GPRS Support Node (GGSN) an IP tunnel (IPT) is provided for transmitting the application's traffic data.

11. Apparatus according to Claim 9 or 10,
**characterized**
**in that** the processing and association unit (V) at the Gateway GPRS Support Node (GGSN) is provided for the purpose of associating the billing on the basis of at least one association rule for the application's traffic data.

12. Apparatus according to one of Claims 9 to 11,
**characterized**
**in that** the communication network provided is a cellular mobile radio network.

## Revendications

1. Procédé pour la taxation de données de trafic d'applications dans un réseau de communication,
**caractérisé en ce que**
un contexte PDP propre entre un serveur de services et/ou un serveur d'application (AS) et le noeud de support GPRS de passerelle (GGSN) est mis à disposition par un noeud de support GPRS de passerelle (GGSN) pour la transmission des données de trafic respectivement d'une application et une taxation est effectuée pour ce contexte PDP.

2. Procédé selon la revendication 1,
**caractérisé en ce qu'**
une attribution pour la taxation des données de trafic de l'application est faite par le noeud de support GPRS de passerelle (GGSN) pour des données de trafic, envoyées par le serveur de services et/ou le serveur d'application (AS), de l'application selon au moins une spécification d'attribution.

3. Procédé selon la revendication 2,
**caractérisé en ce que**
l'attribution concernant la taxation de données de trafic de l'application est effectuée par une unité de traitement et d'attribution (V) du noeud de support GPRS de passerelle (GGSN).

4. Procédé selon l'une quelconque des revendications précédentes,
**caractérisé en ce que**
des informations pour la taxation des données de trafic de l'application sont transmises par le noeud de support GPRS de passerelle (GGSN) à une unité de taxation (VE).

5. Procédé selon l'une quelconque des revendications précédentes,
**caractérisé en ce qu'**
un tunnel IP (IPT) est utilisé pour la transmission des données de trafic de l'application entre le serveur de services et/ou le serveur d'application (AS) et le noeud de support GPRS de passerelle (GGSN).

6. Procédé selon l'une quelconque des revendications précédentes,
**caractérisé en ce que**
le réseau de communication est un réseau de téléphonie mobile cellulaire.

7. Procédé selon l'une quelconque des revendications précédentes,
**caractérisé en ce qu'**
un terminal de téléphonie mobile, une unité portative (handheld), un ordinateur, un notebook et/ou similaires est utilisé comme terminal (MS).

8. Procédé selon l'une quelconque des revendications 2 à 7,
**caractérisé en ce qu'**
au moins l'une des prescriptions à l'attribution concernant la taxation des données de trafic de l'application est signalée par le serveur de services et/ou le serveur d'application (AS) transmettant des données de trafic de l'application au noeud de support GPRS de passerelle (GGSN) recevant des données de trafic de l'application.

9. Dispositif pour la taxation de données de trafic d'applications dans un réseau de communication, **caractérisé en ce que** le dispositif est équipé
- d'une unité de traitement et d'attribution (V) dans un noeud de support GPRS de passerelle (GGSN) pour la mise à disposition respectivement d'un contexte PDP propre pour la transmission de données de trafic de l'application entre un serveur de services et/ou un serveur d'application (AS) et le noeud de support GPRS de passerelle (GGSN) et pour la réalisation de la taxation du contexte PDP et
- d'une unité de réception (E) et d'une unité d'émission (S) dans le noeud de support GPRS de passerelle (GGSN) pour la réception et la transmission des données de trafic de l'application au serveur de services et/ou au serveur d'application (AS) par l'intermédiaire du contexte de PDP.

10. Dispositif selon la revendication 9,
**caractérisé en ce que**
un tunnel IP (IPT) est prévu pour la transmission des données de trafic de l'application entre le serveur de services et/ou le serveur d'application (AS) et le noeud de support GPRS de passerelle (GGSN).

11. Dispositif selon la revendication 9 ou 10,
**caractérisé en ce que**
l'unité de traitement et d'attribution (V) est prévue par le noeud de support GPRS de passerelle (GGSN) pour l'attribution de la taxation selon au moins une prescription d'attribution pour les noeuds de trafic de l'application.

12. Dispositif selon l'une quelconque des revendications 9 à 11,
**caractérisé en ce qu'**
un réseau de téléphonie mobile cellulaire est prévu comme réseau de communication.
